(19) Europäisches Patentamt
European Patent Office
Office européen des brevets

(11) EP 0 870 574 A1

(12) **EUROPEAN PATENT APPLICATION**

(43) Date of publication:
**14.10.1998 Bulletin 1998/42**

(51) Int Cl.[6]: **B23Q 1/01**, G05D 23/02

(21) Application number: **98302779.8**

(22) Date of filing: **09.04.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.04.1997 JP 106683/97**

(71) Applicants:
- **TOYODA KOKI KABUSHIKI KAISHA**
  **Kariya-shi Aichi-ken (JP)**
- **Shinno, Hidenori**
  **Ohta-ku, Tokyo (JP)**

(72) Inventor: **Shinno, Hidenori**
**Ohta-ku, Tokyo (JP)**

(74) Representative: **Whalley, Kevin**
**MARKS & CLERK,**
**57-60 Lincoln's Inn Fields**
**London WC2A 3LS (GB)**

(54) **Sensor, apparatus for determining machining state of machine tool, and method for determining state**

(57) A sensor (10) capable of simultaneously detecting a mechanical behavior and a thermal behavior, an apparatus for determining a machining state of a machine tool (40), and a method for determining a state are provided.

In order to obtain multi-dimensional recognition of a processing state, strain gauges (A1, A2) are disposed on an upper surface of a silicon rubber member (12), and strain gauges (B1, B2) are disposed on a lower surface of the silicon rubber member (12). The strain gauges (A1, A2) are attached to a lower surface of a tool (20). The strain gauges (B1, B2) are attached to a steel plate (14), thereby forming a free interface. The strain gauges (A1, A2, B1, B2) are allowed to output a heat flux between the tool (20) and the free interface, superimposed with a strain change on the tool (20). Since the superimposed signal of the strain change (mechanical behavior) and the heat flux (thermal behavior) is outputted, that is, since the mechanical behavior and the thermal behavior are simultaneously outputted, the multi-dimensional recognition of a machining state can be achieved.

FIG. 1

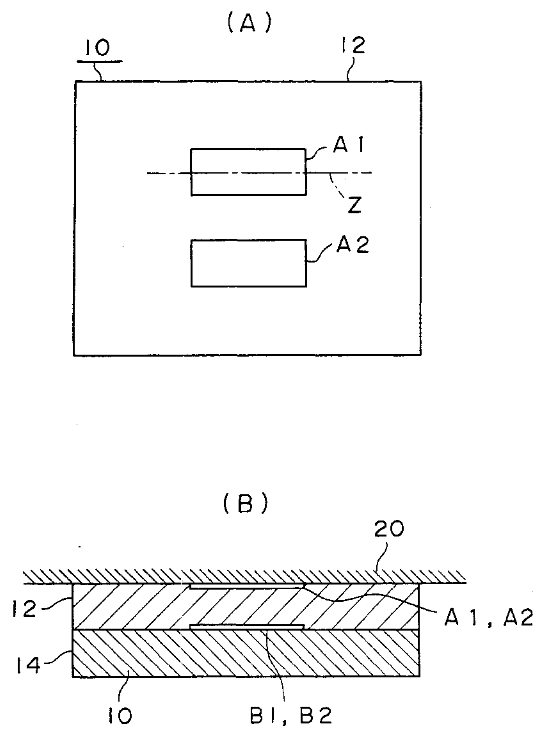


EP 0 870 574 A1

## Description

This invention relates to a sensor, an apparatus for determining a machining state of a machine tool, and a method for determining a state. More particularly, the invention relates to a sensor, an apparatus and a method for reading a multi-dimensional state change in a machining environment.

The demands for higher accuracy and higher efficiency in production and manufacturing are constantly growing, while the number of skilled workers in the production and manufacturing plants is decreasing. Therefore, it has been important to accelerate employment of automated or unmanned flexible manufacturing systems (FMS). In order to successfully realize such a manufacturing environment, there is an urgent need to develop an in-process monitoring technology for detecting and recognizing states of component elements of a machining system for, e.g., machine cutting and the like, during the machining process. The development of an in-process monitoring technology is very important particularly in realization of an unmanned and closed machining environment.

There is a known method employing an acoustic emission (AE) sensor to detect states or conditions of cutting tools, for example, a breakage of a tool, such as chipping or the like. In this method, elastic waves (acoustic emissions) produced during the process of breakage or cracking of an object are detected by the AE sensor in order to acquire information about breakage or abrasion of a tool, such as tool chipping and the like.

However, due to the utilization of elastic waves, the AE sensors have problems of reductions in S/N ratio caused by the effects of disturbances, ambient vibrations and the like. Considering this problem, the present inventors proposed in Japanese patent application laid-open No. Hei 3-213249 a technology that can reduce the effect of noises by using a heat flow sensor to detect an abraded state or breakage of a tool.

However, as in the aforementioned technology using an AE sensor, the technology using a heat flow sensor is designed to merely monitor a single phenomenon, such as a static or dynamic component of cutting force or the like, and is unable to detect multi-dimensional state changes in a machining environment. with this technology, therefore, it is impossible to acquire total understanding of the machining environment.

Monitoring merely thermal behaviors will find it difficult to detect some behaviors, particularly, mechanical behaviors, since the behaviors caused by mechanical state changes, for example, collision or breakage of a tool, deflection of a tool and the like, are unlikely to involve thermal behavioral changes. Likewise, monitoring only mechanical behaviors will find it difficult to detect some other behaviors. Thus, the conventional methods are unable to accurately and simultaneously detect complicated thermal and mechanical state changes in a target object of monitoring.

The invention is intended to solve the above-stated problems. It is an object of the invention to provide a sensor, an apparatus and a method capable of simultaneously detecting a mechanical behavior and a thermal behavior in a machine tool.

According to one aspect of the invention, there is provided a sensor characterized by comprising: a first measuring element, positioned on a measurement target surface, for detecting a strain change on the measurement target surface; a second measuring element positioned on a measurement surface on a free interface side; output means for, on the basis of an output from the first measuring element and an output from the second measuring element, outputting at least one of a heat flux and a temperature difference between the measurement target surface and the measurement surface on the free interface side, superimposed with a strain change on the measurement target surface.

In the sensor described above, the first and second measuring elements may include strain gauges.

In the sensor described above, the second measuring element may be positioned on the measurement surface that is attached to the first measuring element by a viscoelastic material.

According to another aspect of the invention, there is provided an apparatus for determining a machining state of a machine tool, characterized by comprising: a first measuring element, positioned on a measurement target surface of a tool of the machine tool, for detecting a strain change on the measurement target surface; a second measuring element positioned on a measurement surface on a free interface side; output means for, on the basis of an output from the first measuring element and an output from the second measuring element, outputting at least one of a heat flux and a temperature difference between the measurement target surface and the measurement surface on the free interface side, superimposed with a strain change on the measurement target surface; and determination means for determining a state of the machine tool on the basis of a value from the outputting means.

In the apparatus for determining a machining state of a machine tool, the first and second measuring elements may include strain gauges.

In the apparatus for determining a machining state of a machine tool, the second measuring element may be positioned on the measurement surface that is attached to the first measuring element by a viscoelastic material.

According to still another aspect of the invention, there is provided a method for determining a state, characterized in that detecting at least one of a heat flux and a temperature difference between a measurement target surface and a measurement surface on a free interface side by a first measuring element and a second measuring element, the heat flux and the temperature difference superimposed with a strain change on the measurement target surface, the first measuring element positioned on the measurement target surface, for detecting a strain change on the measurement target surface, the second measuring element positioned on the measurement surface on the free interface side; and determining a state of the measurement target on the basis of a value of the detection.

In the method for determining a state, the measurement target may be a tool of a machine tool, and the state of the measurement target to be detected may include at least one of a change in a cutting condition of the tool, chatter vibration, the winding of a cutting chips, and abrasion of the tool.

According to the invention, since a superimposed signal of a strain change (mechanical behavior) and a temperature difference or a heat flux (thermal behavior) on a measurement target is outputted, that is, since a mechanical behavior and a thermal behavior are simultaneously outputted, multi-dimensional recognition of a processing state becomes possible.

Furthermore, according to the invention, it becomes possible to precisely detect complex behavior or feeble state changes caused in a machining environment, such as the state of discharge of cutting chips and the like, which have been difficult to detect according to the conventional art, although the sensor of the invention is simple and compact in construction and plain in measurement principle.

Furthermore, the invention makes it possible to precisely and simultaneously detect changes in thermal and mechanical characteristics during machining. Therefore, it becomes possible to detect from response patterns various machining state changes that have been difficult or impossible to detect according to the conventional art. In addition, high responsiveness can be achieved by detecting heat flux or temperature difference.

The sensor is small and robust, so that the sensor can be easily mounted directly at a target position on a tool or the like. Therefore, various information pieces needed to recognize machining states with a high precision are obtained. Due to the simultaneous detection of thermal and mechanical changes, the sensor has a feature of high stability against singular disturbance, such as vibrations of a machine, changes in ambient temperature and the like. Further, owing to the small size, the sensor of the invention also has advantages of easy mounting on a tool and easy replacement.

The free interface side may be a side which is mechanically insulated from the measurement target surface, preferably being insulated from mechanical strain applied to the measurement target surface. However, the free interface side is preferably in thermal contact with the measurement target surface.

A preferred embodiment of the invention will be described by way of example only, with reference to the drawings wherein:

Fig. 1(A) is a plan view of a sensor according to a preferred embodiment of the invention;
Fig. 1(B) is a sectional view wherein the sensor shown in Fig. 1(A) is mounted on a tool;
Fig. 2 is a circuit diagram showing the wiring of the sensor shown in Figs. 1(A) and 1(B);
Fig. 3 is a plan view of a strain gauge;
Fig. 4 illustrates the mounting position of the sensor;
Fig. 5 is a block diagram of an apparatus for determining a state of a machine tool;
Fig. 6 is a graph indicating results of simulations with respect to the sensor response pattern and the variation of the tool temperature;
Fig. 7 is a graph indicating the sensor response pattern during a normal cutting state;
Fig. 8 is a graph indicating the sensor response pattern when chatter vibration is occurring;
Fig. 9 is a graph indicating the sensor response pattern when cutting chips are wound on a tool shank;
Fig. 10 is a graph indicating the relationships between the cutting speed V and the parameters Ef, Eq, $\theta q$;
Fig. 11 is a graph indicating the relationships between the feed rate f and the parameters Ef, Eq, $\theta q$;
Fig. 12 is a graph indicating the relationships between the depth of cutting d and the parameters Ef, Eq, $\theta q$;
Fig. 13 is a graph indicating the relationships between the amount of tool abrasion and the parameters Ef, Eq, $\theta q$;
Fig. 14 is a graph indicating the relationship between the cutting speed V and the sensor output dynamic component;
Fig. 15 is a graph indicating the relationship between the feed rate f and the sensor output dynamic component; and
Fig. 16 is a graph indicating the relationships between the depth of cutting d and the parameters Ef, Eq, $\theta q$.

The construction of a preferred embodiment will first be described with reference to the plan view of a sensor 10 of Fig. 1(A) and the sectional view of Fig. 1(B) wherein the sensor 10 is mounted on a tool 20.

This embodiment has a multi-layer structure, as clearly shown in Fig. 1(B), in which strain gauges Al, A2 attached face-to-face to a target surface of measurement (the tool 20) and strain gauges B1, B2 attached to a steel plate 14 are adhered to each other by a silicon rubber member 12, that is, a viscoelastic material, to mechanically insulate the gauges from each other. As shown in Fig. 1(A), the strain gauges Al, A2 are disposed parallel to each other. Likewise, the strain gauges B1, B2 are also disposed in parallel although not shown in Fig. 1(A).

The four strain gauges Al, A2, B1, B2 are interconnected to form a bridge circuit as shown in Fig. 2. The four strain gauges have the same configuration. In each strain gauge, as shown in Fig. 3, a filament 34 is laid in the form of grating on a thin insulating base 36 such that a predetermined resistance and a predetermined gauge length are achieved, and the filament 34 is fixed to the base 36 by an adhesive. The filament 34 is connected to gauge leads 32 of a plated copper wire. When these strain gauges receive a mechanical strain, the length of the filament 34 changes and, correspondingly, the resistance thereof changes.

The strain gauges used here are of the self temperature compensating type. That is, the strain gauges used here are strain gauges made of a material having a linear expansion coefficient that is different from that of the tool shank steel, and the strain gauges are calibrated with respect to the tool shank steel so that a linear relationship between the output of each strain gauge and the temperature of the measurement target surface, i.e. the tool shank surface, is obtained. If each strain gauge and the tool shank steel had the same linear expansion coefficient, the thermal deformation would be cancelled out, resulting in no sensor output regarding thermal deformation. Therefore, the strain gauges used in this embodiment are gauges that are designed to be normally used for aluminum objects and are appropriately calibrated, thereby obtaining a linear relationship between the output signal of each strain gauge and the temperature of the measurement target surface. Although the strain gauges used in this embodiment are of the grating type, that is, a mere example of resistant-wire type strain gauges, any type of strain gauges may be used in the invention as long as thermal and mechanical strains of the measurement target surface can be detected.

The silicon rubber member 12 is formed from a silicon rubber material having a heat conductivity such that detection of pattern changes in the output signals from the strain gauges will be facilitated, whereby thermal behaviors of the measurement target (tool 20) can be detected. That is, most appropriate material of the silicon rubber member 12 and thickness thereof are selected in consideration of the material of the measurement target and the material of the steel plate 14 on the free interface.

The steel plate 14 needs to be formed from a material having a known linear expansion coefficient and a sufficiently high rigidity for firm adhesion of the strain gauges. The steel plate 14 serves to dissipate heat generated in the measurement target, from the free interface side, as well as serving as a protective cover for protecting the strain gauges from damages due to contact with cutting chips. For this purpose of heat dissipation, fins or the like may be provided on the steel plate 14. The steel plate 14 may be of any material or shape as long as it serves the aforementioned functions. However, if the steel plate 14 has a linear expansion coefficient that is different from that of the tool, the calculation in measurement of temperature difference described below becomes difficult. Therefore, it is preferred that the linear expansion coefficient of the steel plate 14 is the same as that of the tool.

As is apparent from the description of the construction, the strain gauges A1, A2 attached to the measurement target surface output signals regarding variation of the strain on the measurement target surface. The temperature difference between the upper and lower surfaces of the silicon rubber member 12, that is, a temperature difference $\Delta T$ between the measurement target surface and the steel plate 14 on the free interface side, are detected based on the strain gauges A1, A2 and the strain gauges B1, B2.

The heat flux q ($W/m^2$) that passes through the sensor 10 per unit of time can be determined by the following equation:

$$q = \lambda(\Delta T/d)$$

where $\lambda$ (W/mK) is the heat conductivity of the silicon rubber member 12, and d (m) is the thickness of the silicon rubber member 12.

The measurement of temperature differences will be described below.

When a self temperature compensating type strain gauge designed for a material having a linear expansion coefficient $\theta c$ is attached to the measurement target surface of an object having a linear expansion coefficient of $\theta t$, the relationship between the apparent strain output $\varepsilon T$ and the temperature T is expressed by the following equation:

$$\varepsilon T = (\theta t - \theta c)(T - T0)$$

where T0 is a reference temperature.

Where the temperatures and linear expansion coefficients of the measurement surface and the steel plate in the sensor construction of this embodiment are TA, TB and $\theta A$, $\theta B$, the apparent strain outputs $\varepsilon TA$ and $\varepsilon TB$ of the strain gauges A1, A2 and B1, B2 are expressed by the following equations:

$$\varepsilon TA = (\theta A - \theta C)(TA - T0)$$

$$\varepsilon TB = (\theta B - \theta C)(TB - T0)$$

Then, the output voltage e of the bridge circuit is expressed by the following equation:

$$e = (E/2)Ka(\varepsilon TA - \varepsilon TB)$$
$$= (E/2)Ka((\theta A - \theta C)(TA - T0) - (\theta B - \theta C)(TB - T0))$$

where E is the bridge voltage, and Ka is the gauge rate.

If the linear expansion coefficient of the measurement target (tool 20) equals that of the steel plate 14, then

$$e = (E/2)Ka(\theta A - \theta C)(TA - TB)$$

Therefor, the temperature difference AT between the opposite surfaces of the silicon rubber 12 (viscoelastic member) is given by:

$$\Delta T = TA - TB = 2e/(EKa(\theta A - \theta C))$$

The mounting position of the strain gauges will be described with reference to Fig. 4.

As shown in Fig. 4, the sensor 10 is mounted on an lower surface of the tool 20 for cutting a workpiece W that is rotated relative to the tool 20. As for the mounting direction, the sensor 10 (an axis Z of the sensor 10 in Fig. 1 (A)) is disposed parallel to the shank axis of the tool 20, that is, parallel to the horizontal direction in Fig. 4, so that the strain detection sensitivity of the strain gauges A1-B2 is maximized. Therefore, the sensor 10 is able to detect compressive strain of the lower surface of the tool shank. Normally, the mounting direction of the strain gauges is set to a direction such that the surface strain by cutting force becomes maximum.

The construction of an apparatus for determining a machining state of a machine tool, wherein the sensor of this embodiment is employed, with reference to Fig. 5.

This machine tool state determining apparatus determines a machining state based on an output signal from the sensor 10 mounted on the tool 20 of a machine tool 40 that is controlled by a machine tool control device 44. The output signal from the sensor 10 is amplified by an amplifier 42 and inputted to a computer 50. The computer 50 is made up of a CPU 52 and a memory 54 storing various cutting state patterns. The computer 50 retrieves from the memory 54 a pattern corresponding to the pattern of the output signal from the sensor 10. The computer 50 determines a machining state on the basis of the pattern, and displays the result of determination on a data display device 46.

In order to quantify the mutual relationship between design parameters and sensor output of the sensor 10, computer simulations using a finite element analysis method were carried out. Results of the simulations will be discussed with reference to Fig. 6. The actual output from the sensor 10 during cutting was obtained in the form of a thermal behavioral signal and a mechanical behavioral signal superimposed on each other. The simulations were performed for the purpose of evaluating heat flux passing through the sensor 10 on the basis of a particularly important thermal behavior.

Fig. 6 indicates heat flux passing through the sensor 10 (temperature difference in the sensor) and the tool temperature. As is apparent from Fig. 6, the temperature difference in the sensor (indicated by the solid line in Fig. 6), which serves as an index of variation in the heat flux from a certain heat source, appears as a pattern change that is sharp in temperature increase and decrease compared with the pattern of the behavioral change of the tool temperature (indicated by the dotted line in Fig. 6). Moreover, the temperature difference in the sensor shows a characteristic pattern in a generally rectangular shape. Therefore, the graph of Fig. 6 indicates that during a normal cutting state, a heat flux increase precedes an increase in the tool temperature.

Results of actual experiments with respect to a cutting process will be further discussed with reference to Figs. 7-16.

Figs. 7-9 indicate variations of the output of the sensor 10 in accordance with variations of cutting force, vibration and heat flux when the external turning cutting of a cylindrical workpiece formed of steel S45C is performed under various set cutting conditions.

Fig. 7 indicates a typical example of the sensor output during steady-state cutting. As indicated in Fig. 7, mechanical changes caused by variation of the cutting force are superimposed on the waveform obtained in the above-described simulation regarding the variation of the heat flux over time.

Fig. 8 indicates an example of the sensor output signal when chatter vibration occurs. The chatter vibration refers to, for example, a resonating state of a workpiece W or a state where the tool is vibrating due to the loosening of the tool mounting. As indicated in Fig. 8, in chatter vibration, a characteristic output signal based on a self-oscillating phenomenon is obtained because the feeble thermal flow fluctuation based on changes in the contact state at the cutting point between the tool and the workpiece is precisely reflected on the sensor output signal.

Fig. 9 indicates the sensor output signal when cutting chips are wound on a tool shank. The thermal energy generated at the cutting point is known to disperse into various elements in the tool-workpiece system, particularly, into the tool and chips. If chips wind on the tool shank due to occurrence of an abnormality, a characteristic output signal is obtained wherein the pattern gradually drifts from the steady state pattern described above with reference to Fig. 6. Therefore, the monitoring of the discharge of chips, for which no decisive method has been available according to the conventional art, can now be performed by simultaneously detecting thermal and mechanical characteristic variations.

As can be seen in Figs. 8 and 9, when chatter vibration or an abnormality in the discharge of chips occurs, a respectively characteristic output pattern that clearly differs from the output pattern during the normal state indicated in Fig. 7 is obtained. Therefore, the sensor of this embodiment makes it possible to distinguish abnormal states based on changes in output pattern shape.

In addition to the changes in output pattern during the abnormal states described above, changes in output pattern caused by different cutting conditions or progress of tool abrasion during the normal state will be described. As representative values to detect the variation of the sensor output over time as indicated in Fig. 7, parameters Ef, Eq and $\theta q$ are set. The parameter Ef corresponds to a static component of the cutting force obtained from the sensor output. The parameter Eq corresponds to the maximum value of the sensor output. The parameter $\theta q$ corresponds to the gradient of the sensor output.

Fig. 10 indicates the relationships between the cutting speed V and the parameters Ef, Eq, $\theta q$. As can be seen in Fig. 10, as the cutting speed V increases, the heat flow into the tool 20 increases, so that the maximum value Eq and the gradient $\theta q$ of the sensor output, that is, of the heat flux, increase. In contrast, the parameter Ef remains approximately constant since the cutting force does not substantially change. Under certain cutting conditions, the parameters Eq and $\theta q$ are predictable based on simulations. Therefore, by monitoring the variations of these parameters, variation of the cutting speed V during process can be recognized.

Fig. 11 indicates the relationships between the feed rate f (amount of movement of the tool 20 in the direction of the axis of the workpiece W) and the parameters Ef, Eq, $\theta q$. Fig. 12 indicates the relationships between the depth of cutting d (amount of movement of the tool 20 in the direction of the radius of the workpiece W) and the parameters Ef, Eq, $\theta q$. The feed rate f and the cutting depth d are factors that govern the area of cutting. As the area of cutting increases, the cutting force and the amount of heat generated at the cutting point increase. Therefore, the parameters Ef, Eq, $\theta q$ simply increase as either the feed rate f or the cutting depth d increases as indicated in Figs. 11 or 12. Consequently, it is possible to recognize changes in the feed rate f and the cutting depth d during process by monitoring variations of the parameters.

Fig. 13 indicates the relationship between the progress of abrasion (flank wear) of the tool 20 and the parameters Ef, Eq, $\theta q$. Although the parameter Ef based on the cutting force does not exhibit a clear tendency, the parameters Eq and $\theta q$ based on thermal behaviors increase over time as the abrasion of the tool 20 progresses. Therefore, it is possible to recognize the progress of tool abrasion during machining process by monitoring variations of these parameters.

As is apparent from the foregoing description, the sensor of this embodiment makes it possible to precisely recognize the machining states by simultaneously measuring mechanical behaviors and thermal behaviors, and interpolating them each other. Furthermore, it is possible to identify the cutting conditions in a desired machining process by referring to the machining database in which the sensor outputs obtained under various cutting conditions are stored. The detail and total monitoring of machining states can be achieved by performing waveform analysis, such as pattern matching and the like, in addition to monitoring the parameters Ef, Eq and $\theta q$.

while the foregoing description has been made with regard to the static components of the sensor output according to this embodiment, the following description will be made with regard to a dynamic component of the sensor output. The dynamic component of the sensor output according to this embodiment is considered to correspond to dynamic components of the cutting force.

A dynamic component contained in the sensor output in this embodiment can be determined by finding an amplitude spectrum of the sensor output from the sensor output signal obtained in cutting experiments, on the basis of fast Fourier transformation. Figs. 14-16 indicate the relationships between the dynamic component of the sensor output and the cutting speed V, the feed rate f and the cutting depth d, respectively. As is apparent from the graphs, the dynamic component contained in the sensor output tends to decrease with increases in the cutting speed V, and to increase with increases in the feed rate f and the cutting depth d. It has been disclosed in, for example, "Detection of Tool Wear through Dynamic Component of Cutting Force" Journal of JSPE, 50-7 (1984): 1117-1122, that it is possible to recognize forms of cutting chips, progress of tool abrasion and the like by monitoring a dynamic component of the cutting force. Therefore, in this embodiment, forms of cutting chips, progress of tool abrasion and the like can be recognized by monitoring the dynamic component contained in the sensor output.

As described above with reference to Figs. 7-16, a superimposed signal indicating the cutting force (mechanical behavior) and the cutting heat (thermal behavior) can be obtained by mounting the sensor 10 of the embodiment on a surface of the tool 20. By monitoring the output signal of the sensor 10, it is possible to detect various machining states where the cutting force and the cutting heat vary over time, that is, changes in cutting conditions, tool abrasion, tool breakage, state of discharge of chips, occurrence of chatter vibration, collision between the tool and the workpiece, and so on.

Although, in the foregoing embodiment, the sensor is mounted on a tool for turning, it should be apparent that the sensor of this embodiment is applicable to other processing, such as grinding, cutting and the like.

## Claims

1. A sensor characterized by comprising:

   a first measuring element (A1, A2), positioned on a measurement target surface, for detecting a strain change on the measurement target surface;
   a second measuring element (B1, B2) positioned on a measurement surface on a free interface side; and
   output means for, on the basis of an output from the first measuring element (A1, A2) and an output from the second measuring element (B1, B2), outputting at least one of a heat flux and a temperature difference between the measurement target surface and the measurement surface on the free interface side, superimposed with a strain change on the measurement target surface.

2. A sensor according to claim 1, wherein the first and second measuring elements include strain gauges (A1, A2, B1, B2).

3. A sensor according to claim 1, wherein the second measuring element (B1, B2) is positioned on the measurement surface that is attached to the first measuring element (A1, A2) by a viscoelastic material (12).

4. An apparatus for determining a machining state of a machine tool, characterized by comprising:

   a first measuring element (A1, A2), positioned on a measurement target surface of a tool (20) of the machine tool, for detecting a strain change on the measurement target surface;
   a second measuring element (B1, B2) positioned on a measurement surface on a free interface side;
   output means for, on the basis of an output from the first measuring element (A1, A2) and an output from the second measuring element (B1, B2), outputting at least one of a heat flux and a temperature difference between the measurement target surface and the measurement surface on the free interface side, superimposed with a strain change on the measurement target surface; and
   determination means for determining a machining state of the machine tool on the basis of a value from the outputting means.

5. An apparatus for determining a machining state of a machine tool according to claim 4, wherein the first and second measuring elements include strain gauges (A1, A2, B1, B2).

6. An apparatus for determining a machining state of a machine tool according to claim 4, wherein the second measuring element (B1, B2) is positioned on the measurement surface that is attached to the first measuring element (A1, A2) by a viscoelastic material (12).

7. A method for determining a state, characterized in that detecting at least one of a heat flux and a temperature difference between a measurement target surface of a measurement target and a measurement surface on a free interface side by a first measuring element (A1, A2) and a second measuring element (B1, B2), the heat flux and the temperature difference superimposed with a strain change on the measurement target surface, the first measuring element (A1, A2) positioned on the measurement target surface, for detecting a strain change on the measurement target surface, the second measuring element (B1, B2) positioned on the measurement surface on the free interface side; and determining a state of the measurement target on the basis of a value of the detection.

8. A method for determining a state according to claim 7, wherein the measurement target is a tool of a machine tool, and the state of the measurement target surface to be detected includes at least one of a change in a cutting condition of the tool, chatter vibration, the winding of cutting chips, and abrasion of the tool.

FIG.1

(A)

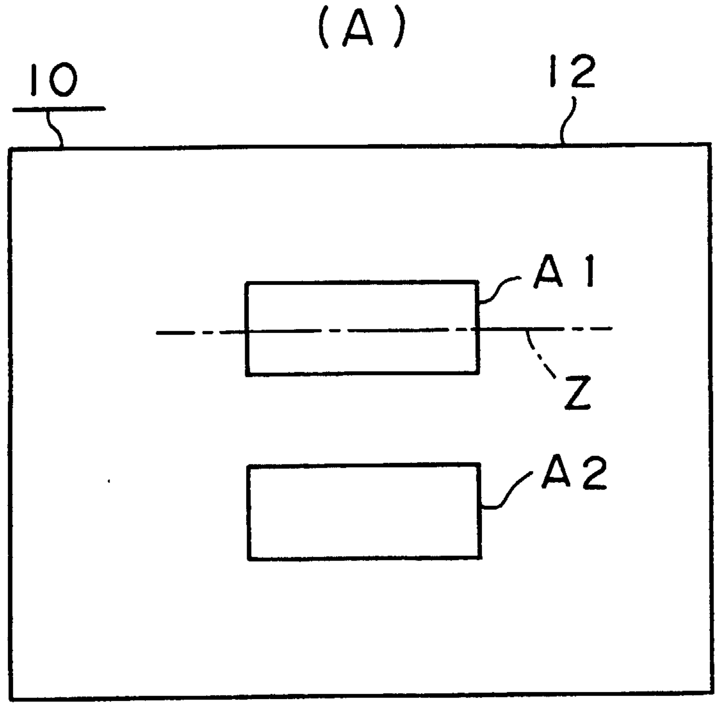


(B)

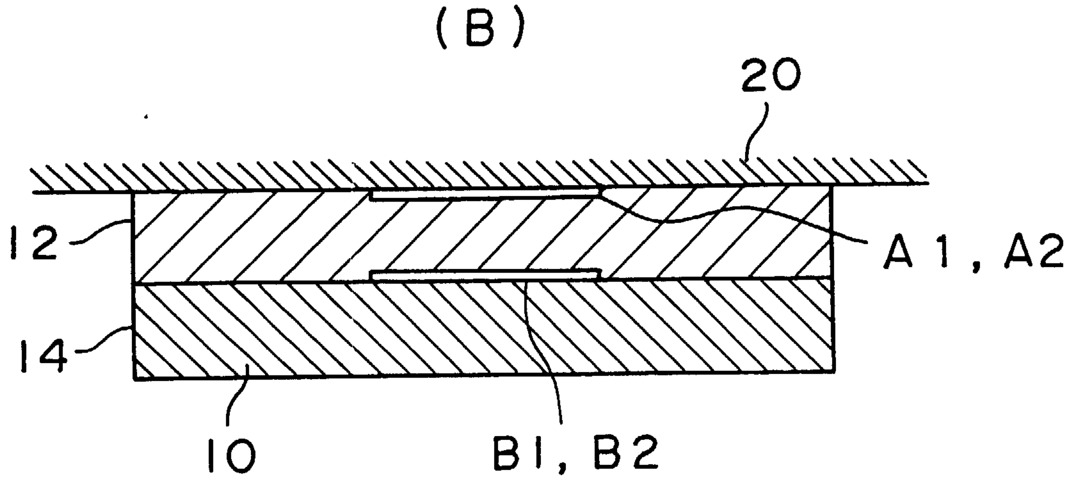

FIG. 2

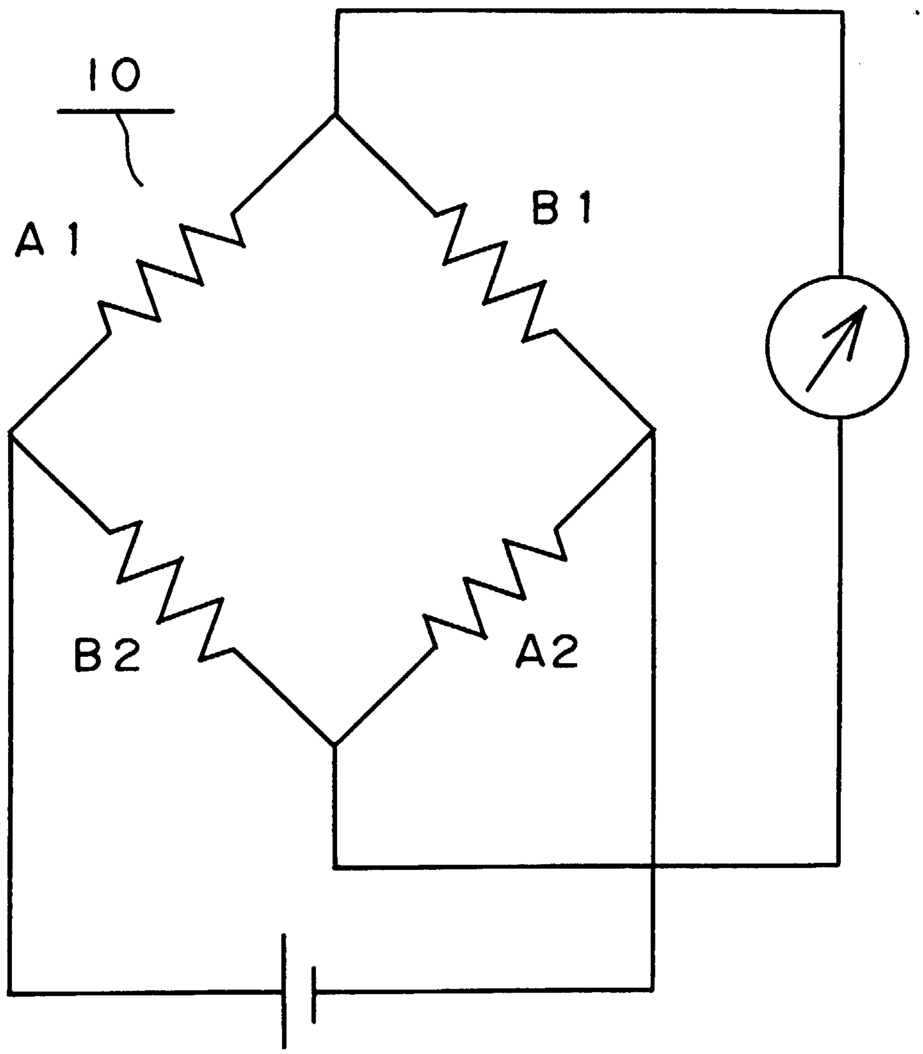

FIG. 3

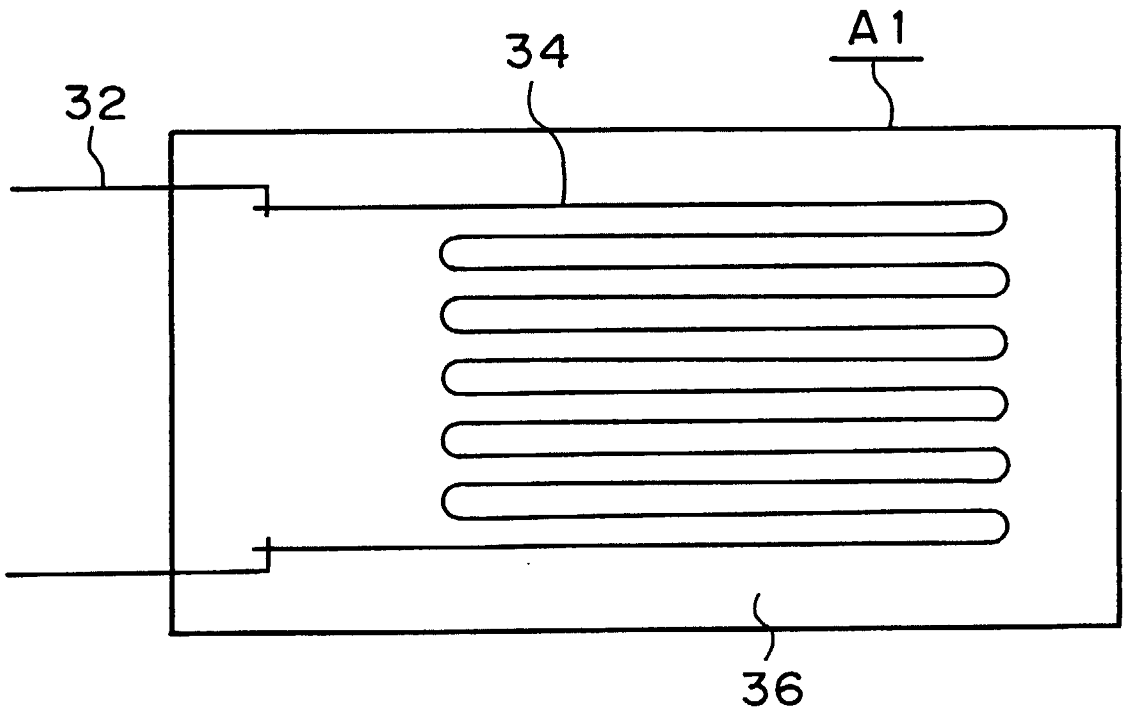

FIG. 4

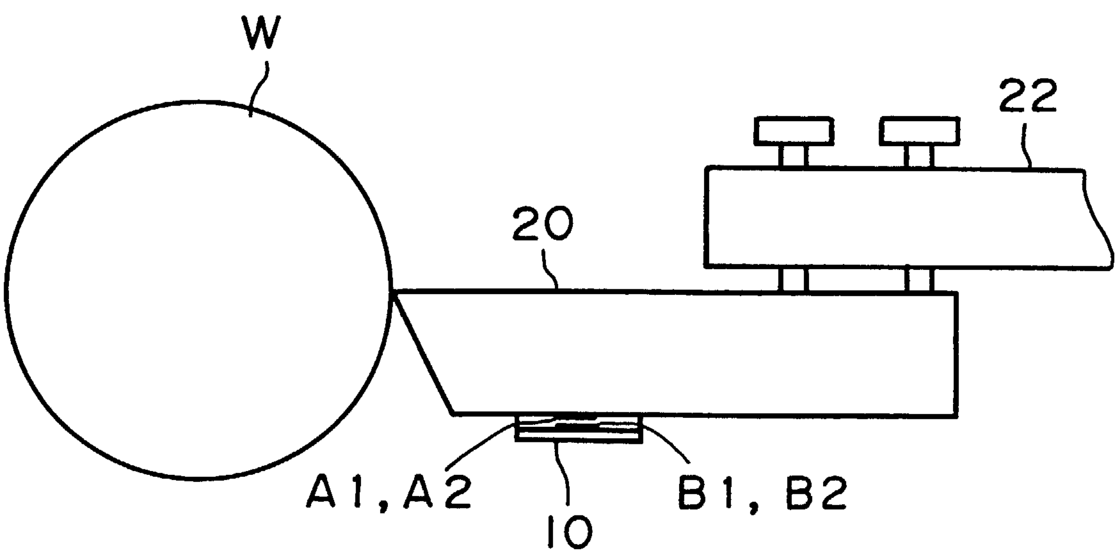

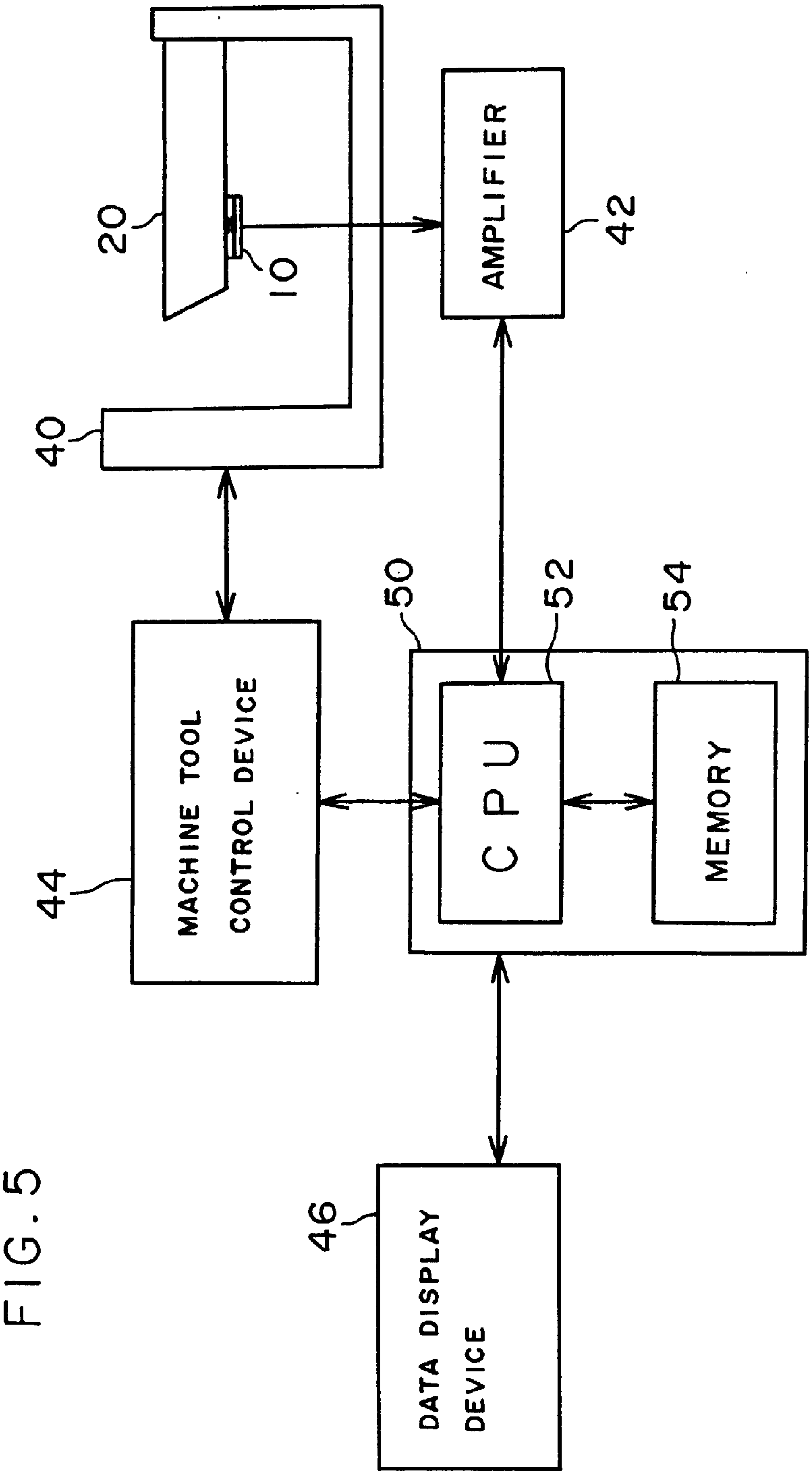

20
10
40
AMPLIFIER
42
MACHINE TOOL
CONTROL DEVICE
44
50
52
54
C P U
MEMORY
DATA DISPLAY
DEVICE
46


FIG. 5

FIG. 6

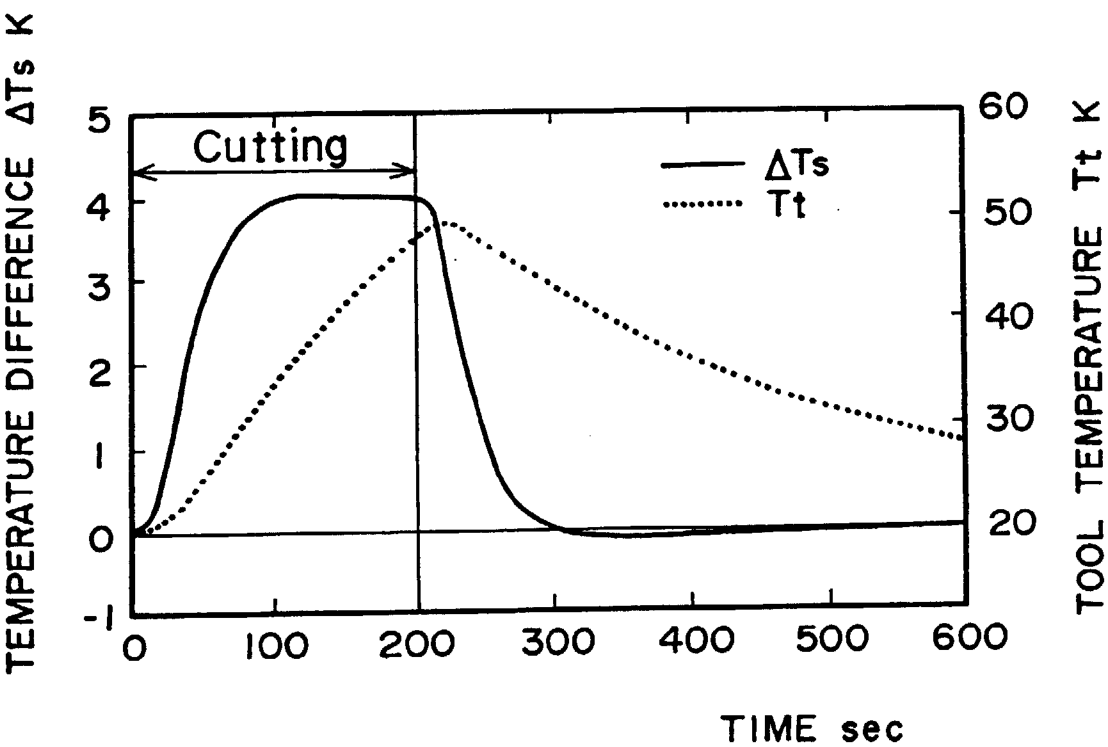
TEMPERATURE DIFFERENCE ΔTs K
TOOL TEMPERATURE Tt K
TIME sec
Cutting
ΔTs
Tt
5
4
3
2
1
0
-1
60
50
40
30
20
0
100
200
300
400
500
600

FIG. 7

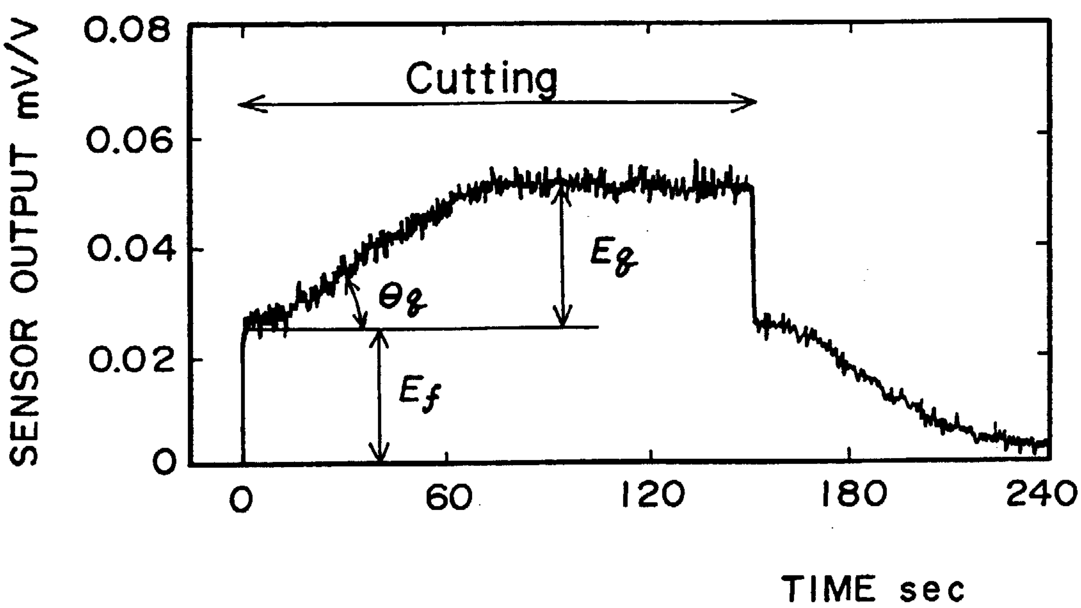
SENSOR OUTPUT mV/V
0.08
0.06
0.04
0.02
0
Cutting
Eg
θg
Ef
0
60
120
180
240
TIME sec

FIG. 8

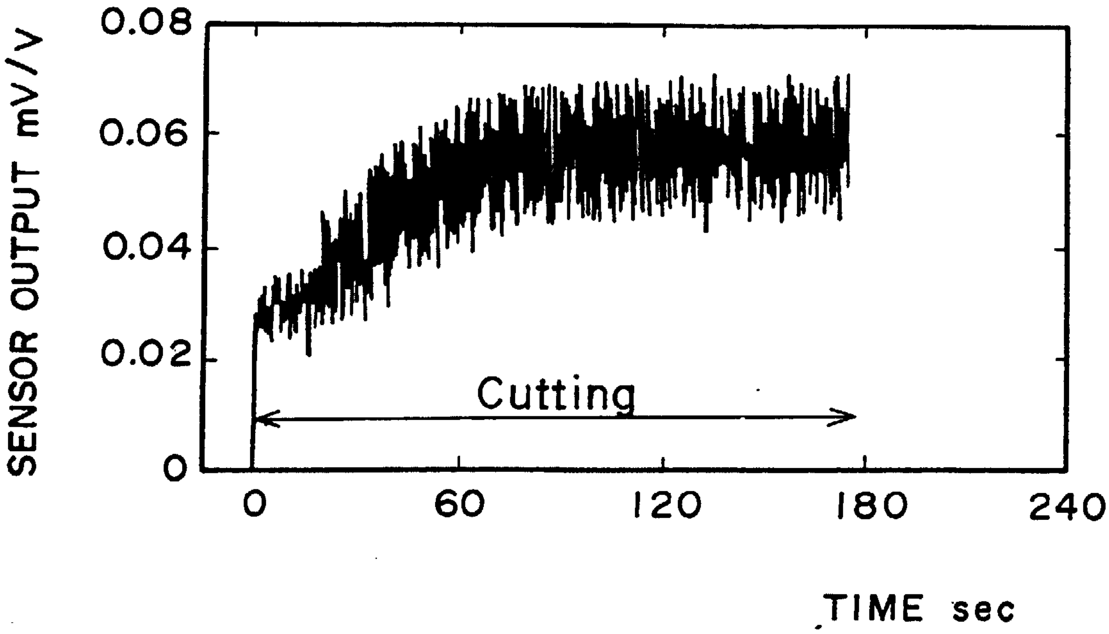
SENSOR OUTPUT mV/V
0.08
0.06
0.04
0.02
0
Cutting
0
60
120
180
240
TIME sec

FIG. 9

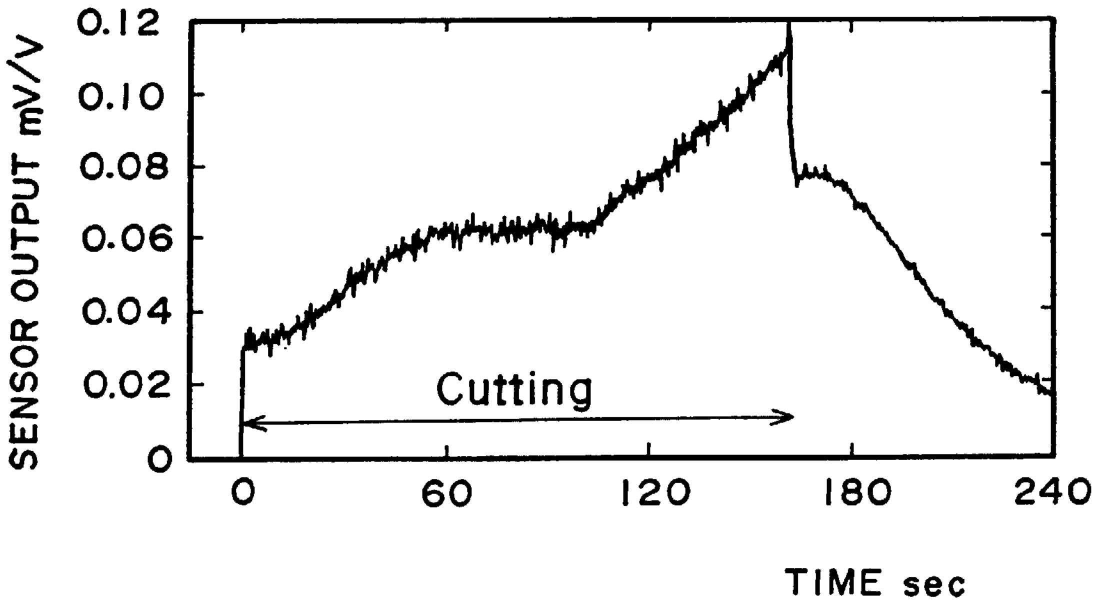
SENSOR OUTPUT mV/V
0.12
0.10
0.08
0.06
0.04
0.02
0
Cutting
0
60
120
180
240
TIME sec

FIG. 10

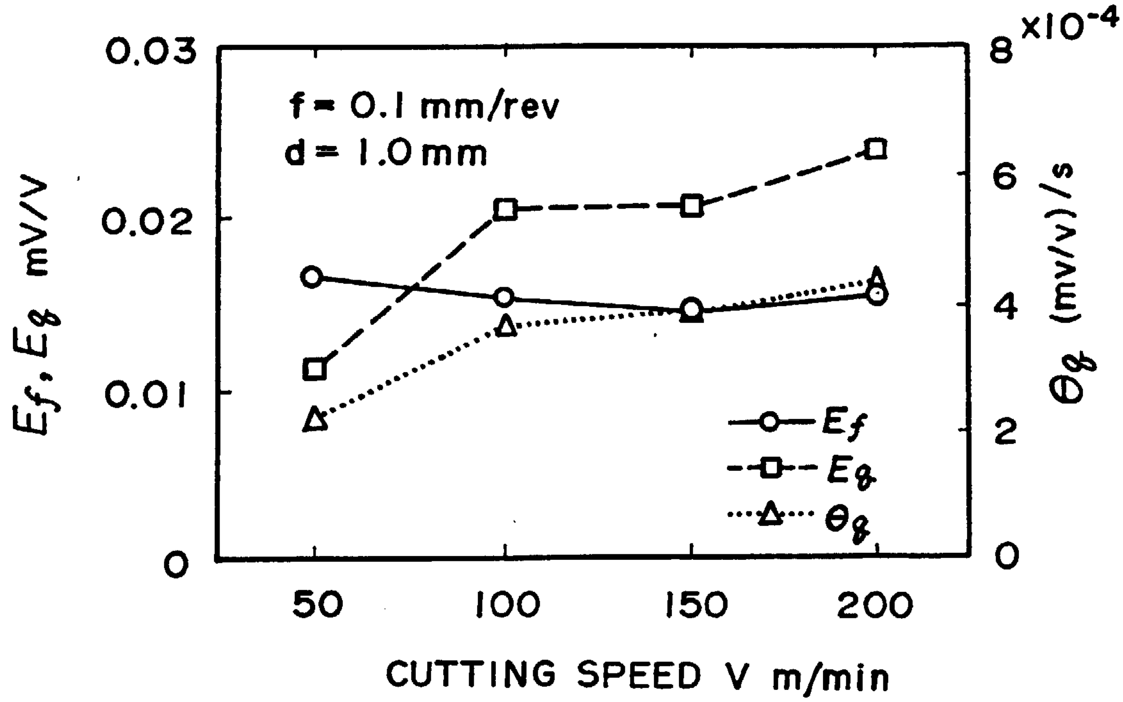

0.03
0.02
0.01
0
8
6
4
2
0
x10⁻⁴
f = 0.1 mm/rev
d = 1.0 mm
Ef, Eg mV/V
θg (mv/v)/s
Ef
Eg
θg
50
100
150
200
CUTTING SPEED V m/min

FIG. 11

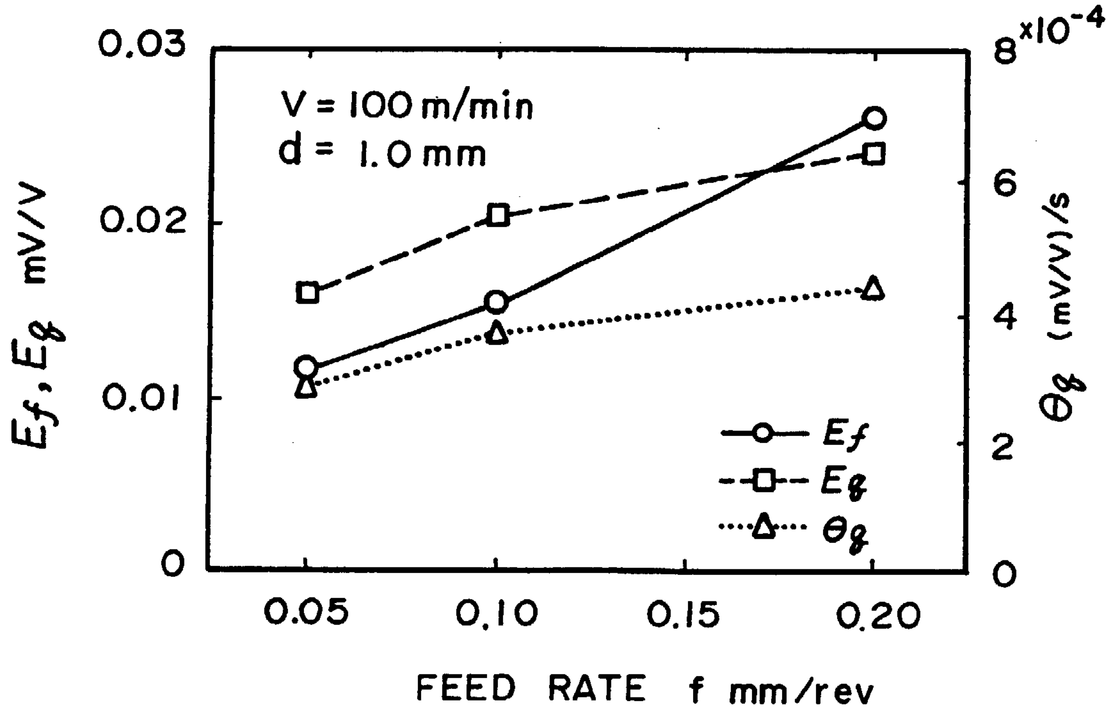
V = 100 m/min
d = 1.0 mm
$E_f$, $E_g$ mV/V
$\theta_g$ (mV/V)/s
×10⁻⁴
0.03
0.02
0.01
0
8
6
4
2
0
0.05
0.10
0.15
0.20
FEED RATE f mm/rev
$E_f$
$E_g$
$\theta_g$

FIG. 12

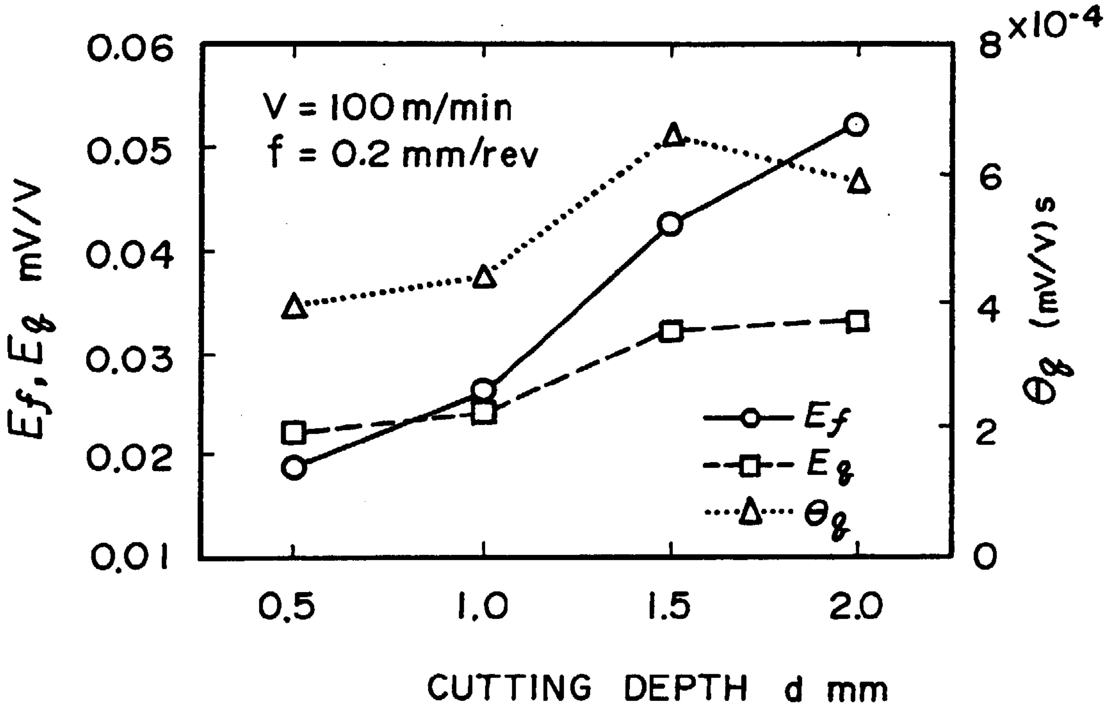
V = 100 m/min
f = 0.2 mm/rev
Ef, Eg mV/V
Θg (mV/V)s
x10-4
0.06
0.05
0.04
0.03
0.02
0.01
8
6
4
2
0
0.5
1.0
1.5
2.0
Ef
Eg
Θg
CUTTING DEPTH d mm

FIG. 13

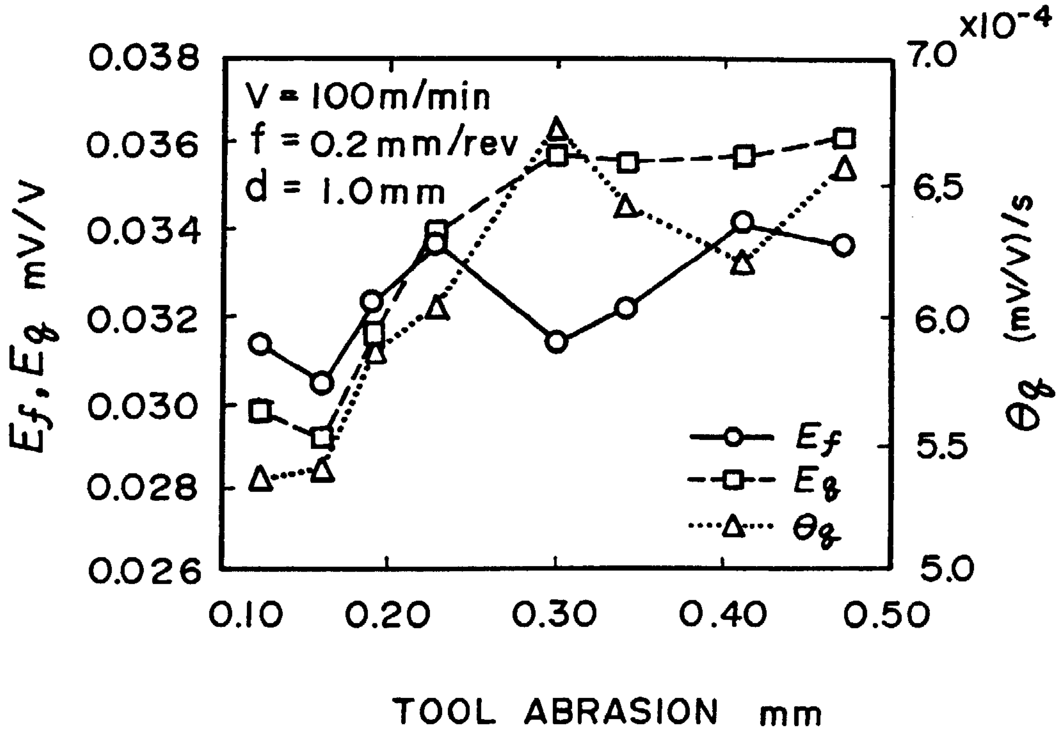
V = 100m/min
f = 0.2mm/rev
d = 1.0mm
0.038
0.036
0.034
0.032
0.030
0.028
0.026
$E_f, E_g$ mV/V
7.0 x10^-4
6.5
6.0
5.5
5.0
$\theta_g$ (mV/V)/s
$E_f$
$E_g$
$\theta_g$
0.10
0.20
0.30
0.40
0.50
TOOL ABRASION mm

FIG. 14

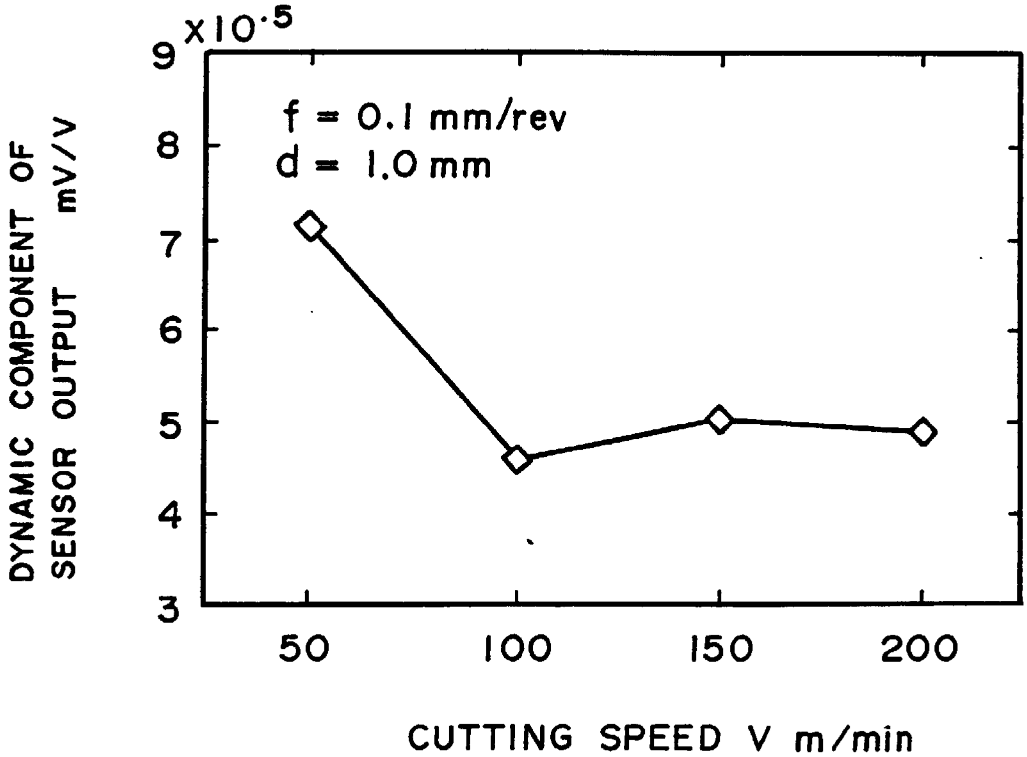
X10-5
9
8
7
6
5
4
3
f = 0.1 mm/rev
d = 1.0 mm
DYNAMIC COMPONENT OF SENSOR OUTPUT mV/V
50
100
150
200
CUTTING SPEED V m/min

FIG. 15

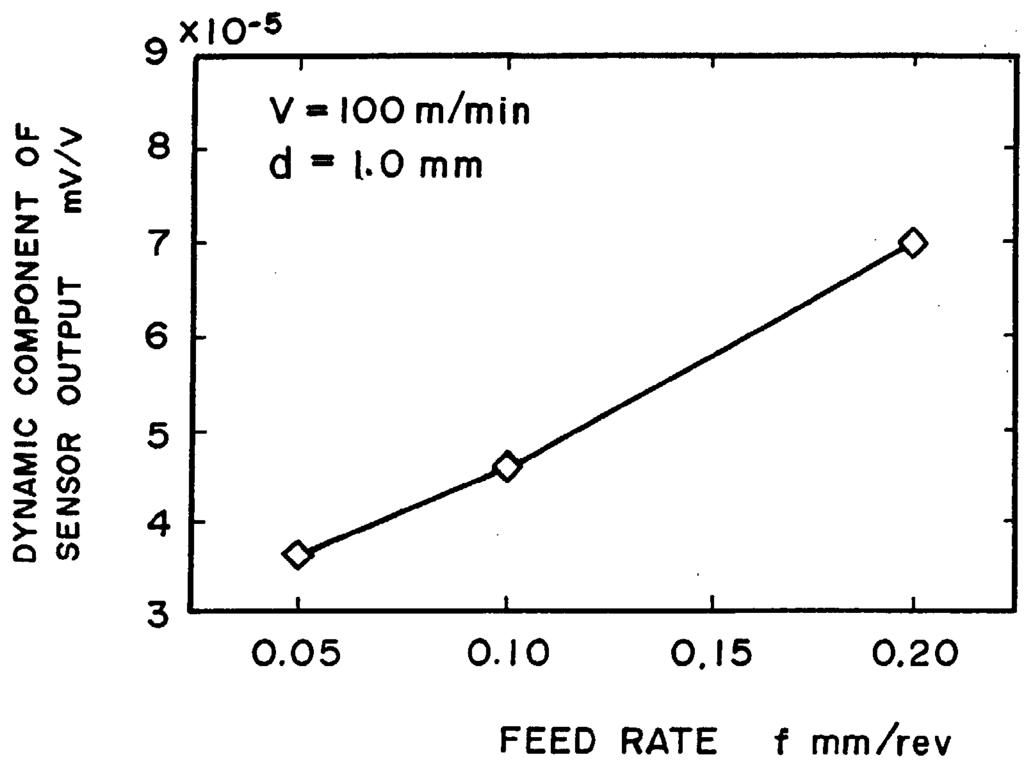
×10⁻⁵
V = 100 m/min
d = 1.0 mm
DYNAMIC COMPONENT OF SENSOR OUTPUT mV/V
9
8
7
6
5
4
3
0.05
0.10
0.15
0.20
FEED RATE f mm/rev

FIG. 16

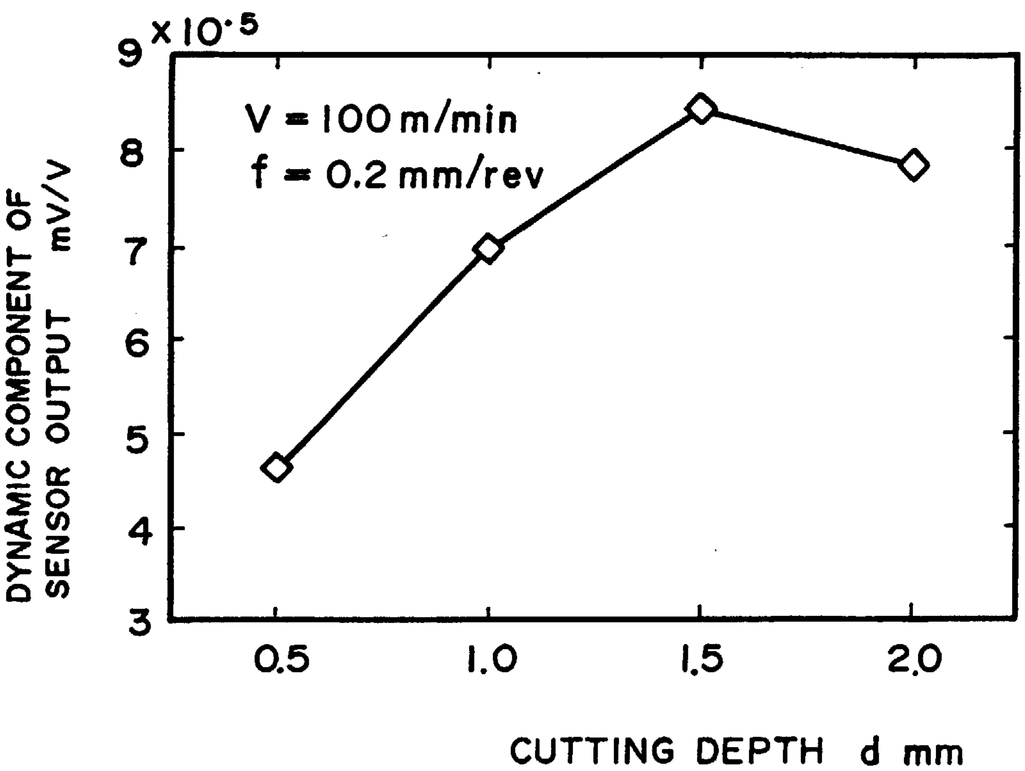
9 ×10⁻⁵
8
7
6
5
4
3
V = 100 m/min
f = 0.2 mm/rev
DYNAMIC COMPONENT OF SENSOR OUTPUT mV/V
0.5
1.0
1.5
2.0
CUTTING DEPTH d mm

European Patent Office

# EUROPEAN SEARCH REPORT

Application Number
EP 98 30 2779

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| A | US 5 553 504 A (LYONS DONALD R ET AL) 10 September 1996<br>* the whole document * | 1,4,7 | B23Q1/01<br>G05D23/02 |
| A | EP 0 528 396 A (IBM) 24 February 1993<br>* the whole document * | 1,4,7 | |
| A | US 4 112 751 A (GRUNBAUM HEINRICH) 12 September 1978<br>* the whole document * | 1,4,7 | |
| A | US 4 555 955 A (MORGAN PAUL W ET AL) 3 December 1985<br>* the whole document * | 1,4,7 | |
| A | EP 0 241 679 A (KRUPP GMBH) 21 October 1987<br>* the whole document * | 1,4,7 | |
| | | | TECHNICAL FIELDS SEARCHED (Int.Cl.6) |
| | | | B23Q<br>G05D |

The present search report has been drawn up for all claims

| Place of search | Date of completion of the search | Examiner |
|---|---|---|
| THE HAGUE | 6 July 1998 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)